# EUROPEAN PATENT APPLICATION

(11) **EP 2 428 605 A2**
(43) Date of publication of application: **14.03.2012**
(21) Application number: 11180117.1
(22) Date of filing: 06.09.2011
(51) Int. Cl.: D06F 37/04, D06F 58/06, F16C 33/72, F16B 21/18

(54) **Washer and/or dryer device comprising snap ring**

(30) Priority: 14.09.2010 TR 201007519
(71) Applicant: Vestel Beyaz Esya Sanayi ve Ticaret A.S., 45030 Manisa (TR)
(72) Inventor: Inci, Bedir, 35320 Izmir (TR); Balik, Orkun, 35030 Izmir (TR); Akkiz, Bora, 35550 Izmir (TR)
(74) Representative: Cayli, Hülya

(57) **Abstract**

A washer and/or dryer device of the invention comprises at least one tub (K); at least one sealing element (1) provided on at least one wall (K1) of the tub (K) and between the clamping elements and the inner part (K2) of the tub (K); at least one member (2) comprising at least one projection (3a) in form of extension towards the center thereof; at least one snap ring (3) comprising at least one projection (3a) in form of extension towards its center; which is placed into the housing (2a) after two ends (3b) of which are bent towards each other; when it is placed into this housing (2a), said projection (3a) contacts with side of the sealing element (1) facing the inner part (K2) of the tub (K).

## Description

### Technical Field

The present invention relates to fixation of sealing element provided in washer and/or dryer devices and placed in a tub.

### Prior Art

A tub provided in washer and/or dryer devices is mounted in the device by various clamping elements (for example, bearing housing, bearing etc.). A sealing element is used in order to prevent said clamping elements from contacting with water and/or air in the tub during the operating of the device. Thus, water and/or air are prevented from harming said elements provided in the tub. However, when said sealing element is not fixed on the tub, it is displaced due to the movement of the tub and the clamping elements may contact with water and/or air during operating of device. In that case, these elements may get harmed (for example, they get corroded) and lifetime of the device is decreased. In addition, it will be costly for the user to get these elements repaired.

For the solution of said problem, in the patent document No. EP2088232A1 in state of art, there are provided clips in region in which the clamping elements on the tub there are provided clips positioned in region on the tub in which the clamping elements communicate with the tub. The sealing element is positioned between the clamping elements and the clip, and then the clips exert pressure on the sealing element. Thus, fixation of the sealing element is ensured.

In other patent document No. DE4422853A1 in state of art, a two-part fixation embodiment is disclosed. A circular ring-shaped protective element is mounted on the drum axle. The other protective element is mounted on bearing housing. These two parts fix radial shaft sealing ring serving as sealing element.

### Brief Disclosure of the Invention

The washer and/or dryer device developed by present invention comprises at least one tub; at least one sealing element provided on at least one wall of the tub and between the clamping elements and inner part of tub; at least one member on the wall comprising at least one snap ring housing; at least one snap ring which comprises at least one projection in form of extension towards the center thereof, which is placed into said housing after its two ends are bent to each other, thus when it is placed into said housing, said projection contacts with the side of the sealing element facing the inner part of the tub.

After the clamping elements and the sealing element are placed on the wall, the snap ring is placed into said housing provided in said member and the projection in the snap ring contacts with the side of sealing element facing the inner part of the tub. Thus, the sealing element is fixed there and it is prevented from getting displaced due to the movement of the tub during the operating of the device.

### Objective of the Invention

An aim of this invention is to develop a washer and/or dryer device comprising a snap ring which fixes the sealing element provided on montage wall of the tub.

Another aim of the invention is to develop a washer and/or dryer device in which the sealing element is prevented from getting displaced due to the movement of the tub during the operating of the device.

A further aim of the device is to create an easy to produce, mount and use, cheap and safety fixation embodiment of a sealing element.

### Description of the Drawings

An exemplary tub provided in a washer and/or dryer device of the invention, an exemplary snap ring used herein and a member into which this snap ring is placed are shown in annexed figures, wherein;
Figure 1 is perspective view of the tub.
Figure 2 is side sectional view of wall, which is mounted to device, of the tub,.
Figure 3 is perspective view of the snap ring.
Figure 4 is perspective view of the member into which the snap ring is placed.
Figure 5 is side sectional view of the member shown in Figure 4.

All the parts illustrated in figures are individually assigned a reference numeral and the corresponding terms of these numbers are listed below.

| | |
|---|---|
| Tub | (K) |
| Wall | (K1) |
| Inner part | (K2) |
| Sealing element | (1) |
| Member | (2) |
| Snap ring housing | (2a) |
| Snap ring | (3) |
| Projection | (3a) |
| End of snap ring | (3b) |
| External surface | (3c) |
| Bearing housing | (4) |
| Bearing | (5, 6) |

### Disclosure of the Invention

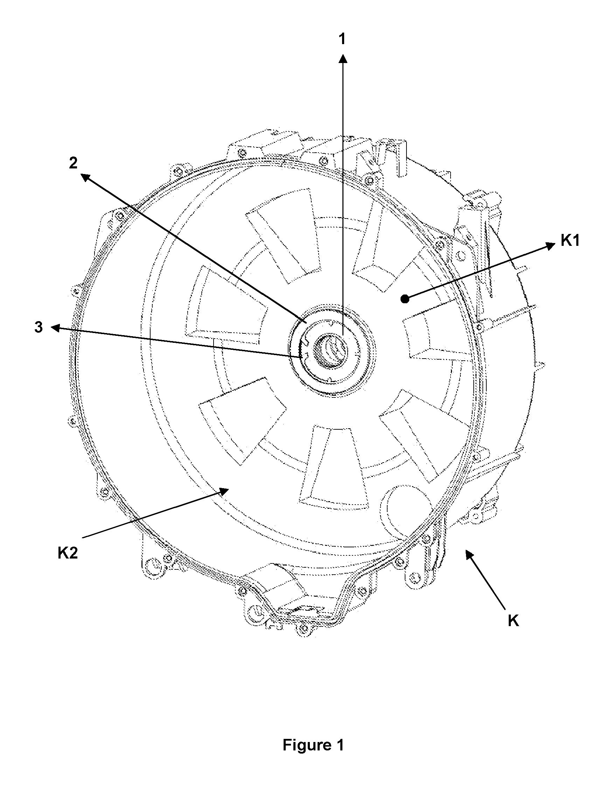

Perspective view of at least one tub (K) provided in washer and/or dryer device (not shown in figures) of the invention is illustrated in Figure 1. There are at least one sealing element (1) on the wall (K1), which is mounted on the device, of the tub (K), and at least one snap ring (3) fixing this element (1) in the region it is present on the wall (K1).

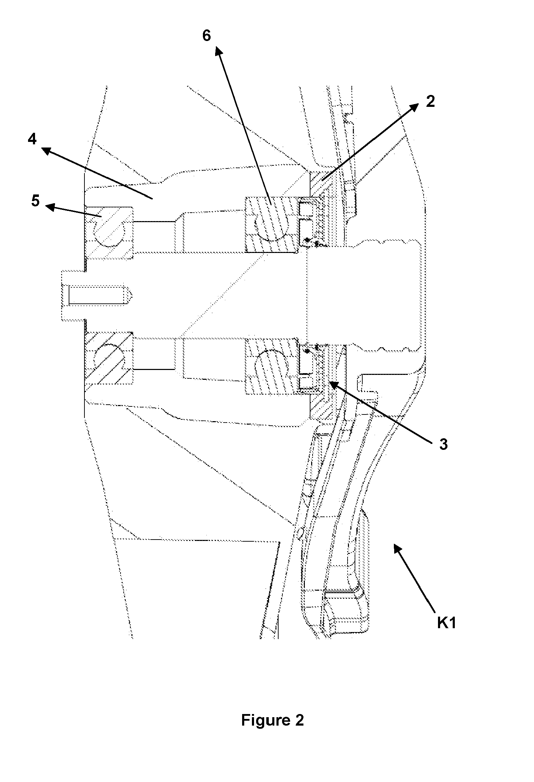

The tub (K), whose side sectional view of the wall (K1) which is mounted to the device, is illustrated in the Figure 2, is mounted to the device by means of clamping elements (for example, bearing housing (4), bearing (5, 6)) provided on said wall (K1). The sealing element (1) provided on said wall (K1) of the tub (K) is positioned between said clamping elements (4, 5, 6) and inner part (K2) of the tub (K); thus this ensures the clamping elements (4, 5, 6) to be sealed. Thus, this sealing element (1) prevents water and/or air in the tub (K) from contacting with clamping elements (4, 5, 6).

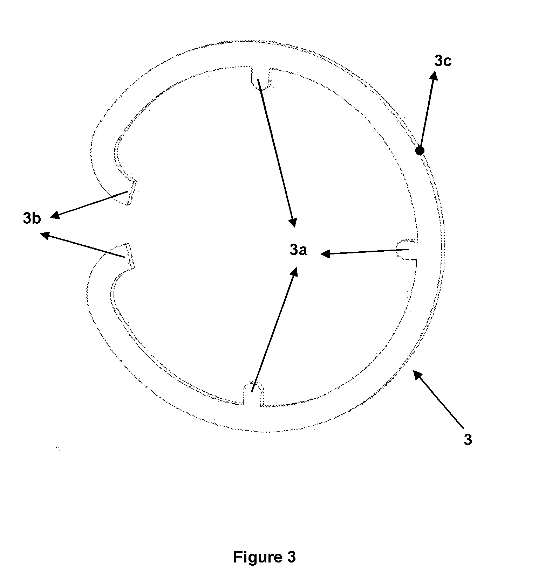

The snap ring (3), whose perspective view is illustrated in the Figure 3, comprises at least one projection (3a) which is in form of extension towards center of this snap ring (3). When the sealing element (1) is placed on the wall (K1) of the tub (K), this projection (3a) remains at side of said element (1) facing the inner part (K2) of the tub (K) and said element (1) is fixed on the region it is present on the wall (K1). Thus, the sealing element (1) is prevented from being displaced due to movement of the tub (K).

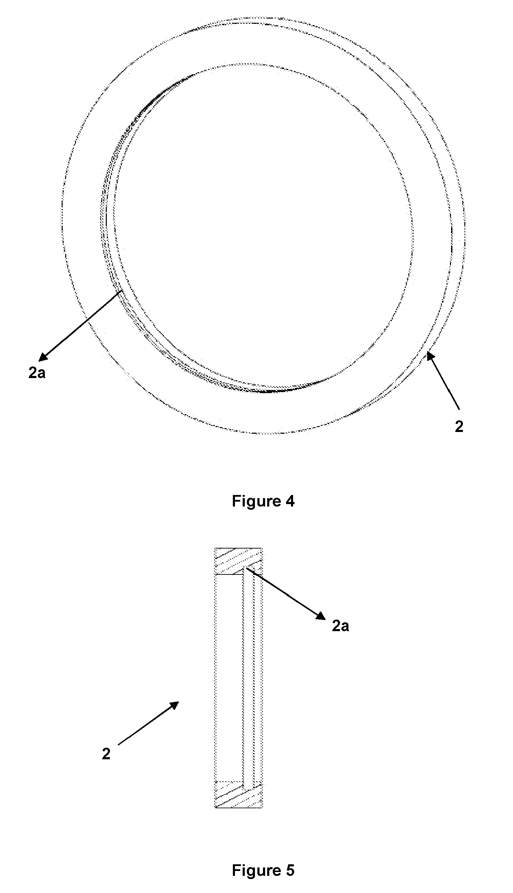

Said snap ring (3) is placed in at least one bearing housing (2a), provided in the ring-shaped member (2), whose perspective view is illustrated in Figure 4 and which is provided on the wall (K1) of the tub (K). This member (2) can be mounted on the wall (K1) afterwards and also can be created in single piece with the tub (K) following that it is placed in the plate used for the production of the tub (K) together with the bearing housing (4) during production of the tube (K) with injection.

After the sealing element (1) is placed on the wall (K1), both two ends (3b) of snap ring (3) are bent towards each other and placed in housing (2a) provided in the member (2), whose side sectional view is illustrated in Figure 5. Thus, the projection (3a) on the snap ring (3) contacts with the side of sealing element (1) facing the inner part (K2) of the tub (K) and it prevents movement of the sealing element (1).

In one embodiment of the invention, diameter of the snap ring (3) is greater than the diameter of the snap ring housing (2a). Thus, when the snap ring (3) is placed in the housing (2a) by bending both ends (3b) of the snap ring (3), external surface (3c) of the snap ring (3) exerts pressure on the internal wall of the housing (2a). This pressure prevents the snap ring (2) from being displaced from the housing (2a) by the movement of the tub (K) during the operating of the device.

In exemplary embodiment illustrated in Figure 3, both ends (3b) of the snap ring (3) are bent as in form of extension towards the center of this snap ring (3). Thus, these two ends contact with the sealing element (1) and this element (1) is prevented from being moved during the operating of the device.

When the bearing (6) or the sealing element (1) are not placed properly in the bearing housing (4) during the montage, the sealing element (1) closes the housing (2a), into which the snap ring (3) is placed, and it does not allow the snap ring (3) to be placed. Thus, a problem in montage can be determined easily and errors in production and montage can be determined beforehand and eliminated.

## Claims

1. A washer and/or dryer device comprising at least one tub (K), at least one sealing element (1) provided between the clamping elements and the inner part (K2) of the tub (K), on at least one wall (K1) of the tub (K) **characterized in that**;
- at least one member (2) which is provided on the wall (K1) and comprising at least one snap ring housing (2a),
- at least one snap ring (3) comprising at least one projection (3a) in form of extension towards center thereof; which is placed into the housing (2a) after two ends (3b) of which are bent towards each other; when it is placed into this housing (2a), said projection (3a) contacts with side of the sealing element (1) facing the inner part (K2) of the tub (K).

2. A washer and/or dryer device according to Claim 1, **characterized in that** both ends (3b) of the snap ring (3) are bent as in form of extension towards the center of the snap ring (3).

3. A washer and/or dryer device according to Claim 1, **characterized in that** diameter of the snap ring (3) is greater than diameter of the housing (2a).

4. A washer and/or dryer device according to Claim 1, **characterized in that** said member (2) is in a single piece with the tub (K).
